# EUROPEAN PATENT SPECIFICATION

(11) **EP 4 638 618 B1**
(45) Date of publication and mention of the grant of the patent: **11.11.2026**
(21) Application number: 23834176.2
(22) Date of filing: 19.12.2023
(51) Int. Cl.: C09D 13/00

(54) **WAX CRAYON COMPRISING MULTIPLE PIGMENTS**
WACHSKREIDE MIT MEHREREN PIGMENTEN
CRAYON DE CIRE COMPRENANT DE MULTIPLES PIGMENTS

(30) Priority: 20.12.2022 EP 22306946
(43) Date of publication of application: 29.10.2025
(73) Proprietor: Société BIC, 92110 Clichy (FR)
(72) Inventor: GOUEREC, Julien, 92110 CLICHY (FR); NAPOLY, Justine, 92110 CLICHY (FR); VAN HOLTEN, Allart, 2491 DA, The Hague (NL); VAN CALDENBORGH, Olav, 2491 DA, The Hague (NL)
(74) Representative: BIC
(86) International application number: PCT/EP2023/086748
(87) International publication number: WO 2024/133336

(56) References cited:
- EP-A1- 0 636 668
- EP-A1- 2 602 292
- EP-A1- 3 772 532
- US-A- 4 617 058
- US-A- 5 498 280

## Description

### Cross Reference to Related Application

This application claims priority from the European Patent Application EP 22306946.9, filed on 20th December 2022.

### Technical Field

The present invention relates to the field of writing instruments. More specifically the present invention relates to writing instruments comprising multiple white pigments.

### Background

The present invention relates to writing instruments, such as wax crayons or colored pencils.

Writing instruments such as pencils and wax crayons comprise or consist of a solid pigment core, also referred to as a lead. The writing instruments comprising a lead are used to create markings by rubbing the lead against a substrate, such as a piece of paper, to form a deposit on the substrate.

The leads comprise a structural component mixed with one or more colorants, such as pigments or dyes. For example, a wax crayon may comprise wax as a structural component, wherein the wax is mixed with a blue pigment to produce a blue wax crayon.

However, the resulting shade of the lead and the markings produced by the lead may be considered too dark. For example, mixing a wax with a blue pigment may result in a dark blue color of the lead and its marking. To obtain a lead of a lighter shade, the wax may be mixed with a white colorant. Typically the white pigment TiO₂ is used to lighten the shade of leads, due to its strong whitening effect. For example, a wax may be mixed with a blue pigment and additionally TiO₂ to obtain a light blue wax crayon, which may provide a light blue deposit, in particular when deposited on a white paper.

However, recently concerns have emerged that TiO₂ dust may possibly be carcinogenic to humans. During the production of leads comprising TiO₂, in particular during the mixing of the structural component with the TiO₂, TiO₂ may be generated, which may be harmful to manufacturing personnel.

US 4617058 A relates to a process for producing blackboard crayon by molding a mixture of calcium carbonate, titanium oxide and zinc oxide in place of conventional calcined gypsum or chalk, a resinous material primarily containing paraffin, beef tallow or palm oil as a coagulant, and a solvent, into a stick form.

EP 0636668 A1 relates to a a solid drawing composition comprising barium sulfate, the composition further comprising, as a barium dissolving inhibitor, at least one of (a) alkali metal sulfate, (b) beryllium sulfate, magnesium sulfate, calcium sulfate or strontium sulfate, (c) aluminum sulfate, (d) zinc sulfate, and (e) a double salt of said sulfates (a) to (d).

US 5498280 A relates to a phosphorescent and fluorescent marking composition, e.g., a crayon, comprising both high and low molecular weight polyethylene glycols in combination with phosphorescent and fluorescent pigments.

EP 3772532 A1 relates to a colored pencil lead or colored chalk with a lead base containing waxes, at least one filler and at least one colorant, wherein the waxes include at least one oxidized ethylene vinyl acetate wax (EVA) and at least one functionalized metallocene polyolefin wax.

EP 2602292 A1 relates to a solid drawing material containing at least a resin component, a wax component, a pigment, titanium dioxide, and a filler, wherein the resin component includes rosin and/or modified rosin in an amount that is within the range of 0.5 to 20 wt%, and the wax component includes a glycerin fatty acid ester and/or pentaerythritol fatty acid ester, both fatty acid esters having a melting point of 45°C or higher, in an amount that is within the range of 8 to 50 wt%.

The present disclosure aims to address the aforementioned issues in optimizing the writing instrument's lead composition.

### Summary

In a first aspect, the present disclosure relates to a writing instrument comprising a lead, wherein the lead comprises at least two pigments selected from the group of BaSO₄, Ca₂SiO₄, CaCO₃ and at least one pigment selected from the group of ZnS, ZnO and ZrO₂. The combination of the at least two pigments and the at least one pigment is present in an amount between about 1.2 wt.-% to about 50 wt.-%, relative to the total weight of the lead; and the lead comprises less than 1 wt.-% TiO₂.

In some embodiments, the lead may comprise all of the pigments from the group of BaSO₄, Ca₂SiO₄, CaCO₃.

In some embodiments, the lead may comprise ZnS.

In some embodiments, the lead may comprise less than about 0.5 wt.-%, more specifically less than about 0.2 wt.-% and in particular substantially no or no TiO₂.

In some embodiments, the lead may comprise less than about 0.5 wt.-%, more specifically less than about 0.2 wt.-% and in particular substantially no or no FeS.

In some embodiments, the ratio of BaSO₄ to Ca₂SiO₄ may be between about 8:1 to about 1:1, more specifically between about 6:1 to about 1.5:1 and in particular between about 4:1 to about 2:1.

In some embodiments, the ratio of BaSO₄ to CaCO₃ may be between about 50:1 to about 2:1, more specifically between about 30:1 to about 5:1 and in particular between about 20:1 to about 7:1.

In some embodiments, the ratio of BaSO₄ to the total content of ZnS, ZnO and ZrO₂ may be between about 5:1 to about 1:3, more specifically between about 3:1 to about 1:2 and in particular between about 2:1 to about 1:1.

In some embodiments, the ratio of Ca₂SiO₄ to CaCO₃ may be between about 8:1 to about 1:1, more specifically between about 6:1 to about 1.5:1 and in particular between about 4:1 to about 2:1.

In some embodiments, the ratio of the total content of ZnS, ZnO and ZrO₂ to Ca₂SiO₄ may be between about 5:1 to about 1:3, more specifically between about 4:1 to about 1:2 and in particular between about 3:1 to about 1:1.

In some embodiments, the ratio of the total content of ZnS, ZnO and ZrO₂ to CaCO₃ may be between about 20:1 to about 1:1, more specifically between about 15:1 to about 2:1 and in particular between about 10:1 to about 3:1

In some embodiments, the BaSO₄ particles may have a D₅₀ between about 0.1 µm to about 10 µm, more specifically between about 0.3 µm to about 3 µm, in particular between about 0.5 µm to about 1.5 µm.

In some embodiments, the Ca₂SiO₄ particles may have a D₅₀ between about 1 µm to about 100 µm, more specifically between about 3 µm to about 30 µm and in particular between about 5 µm to about 15 µm.

In some embodiments, the CaCO₃ particles may have a D₅₀ between about 10 nm to about 1000 nm, more specifically between about 30 nm to about 300 nm and in particular between about 50 nm to about 150 nm.

In some embodiments, the ZnS, ZnO and/or ZrO₂ particles may have a D₅₀ between about 30 nm to about 1000 nm, more specifically between about 50 nm to about 700 nm and in particular between about 250 nm to about 450 nm.

In some embodiments, the BaSO₄ particles may have a D₉₀ between about 0.15 µm to about 15 µm, more specifically between about 0.5 µm to about 5 µm, in particular between about 1.3 µm to about 2.3 µm.

In some embodiments, the Ca₂SiO₄ particles may have a D₉₀ between about 3 µm to about 150 µm, more specifically between about 7 µm to about 50 µm and in particular between about 10 µm to about 30 µm.

In some embodiments, the CaCO₃ particles may have a D₉₀ between about 50 nm to about 1500 nm, more specifically between about 150 nm to about 700 nm and in particular between about 250 nm to about 400 nm.

In some embodiments, the ZnS, ZnO and/or ZrO₂ particles may have a D₉₀ between about 50 nm to about 1500 nm, more specifically between about 300 nm to about 1250 nm and in particular between about 700 nm to about 1000 nm.

In some embodiments, the BaSO₄ particles may have a BET-value between about 0.5 m²/g to about 20 m²/g, more specifically between about 1.5 m²/g to about 8 m²/g and in particular about 2 m²/g to about 6 m²/g, measured according to DIN ISO 9277:2014-01.

In some embodiments, Ca₂SiO₄ particles may have a BET-value between about 2 m²/g to about 150 m²/g, more specifically between about 10 m²/g to about 70 m²/g and in particular about 25 m²/g to about 55 m²/g, measured according to DIN ISO 9277:2014-01.

In some embodiments, CaCO₃ particles may have a BET-value between about 5 m²/g to about 150 m²/g, more specifically between about 10 m²/g to about 70 m²/g and in particular about 20 m²/g to about 40 m²/g, measured according to DIN ISO 9277:2014-01.

In some embodiments, the ZnS, ZnO and/or ZrO₂ particles may have a BET-value between about 1 m²/g to about 25 m²/g, more specifically between about 3 m²/g to about 15 m²/g and in particular about 5 m²/g to about 11 m²/g, measured according to DIN ISO 9277:2014-01.

In some embodiments, the lead may comprise between about 2 wt.-% to about 40 wt.-%, more specifically between about 3 wt.-% to about 30 wt.-%, even mor specifically between about 4 wt.-% to about 27 wt.-%, and in particular between about 5 wt.-% to about 25 wt.-% of a combination of the at least two pigments, relative to the total weight of the lead.

In some embodiments, the writing instrument may be a handheld writing instrument.

In some embodiments, the lead may have a diameter between about 5 mm to about 35 mm, more specifically between about 6 mm to about 20 mm and in particular 7 mm to about 12 mm.

In some embodiments, the writing instrument may comprise a casing and the lead may be comprised within the casing.

In some embodiments, the lead may have a diameter of between about 2.0 mm to about 4.5 mm, more specifically between about 2.3 mm to about 4.2 mm and in particular between about 2.8 mm to about 4.0 mm.

In some embodiments, the lead may comprise between about 10 wt.-% to about 95 wt.-% of one or more waxes, relative to the total weight of the lead.

In some embodiments, the lead may comprise between about 50 wt.-% to about 95 wt.-%, more specifically, between about 60 wt.-% to about 90 wt.-% and in particular between about 70 wt.-% to about 85 wt.-% of the one or more waxes, relative to the total weight of the lead.

In some embodiments, the lead may comprise between about 10 wt.-% to about 45 wt.-%, more specifically, between about 15 wt.-% to about 40 wt.-% and in particular between about 20 wt.-% to about 30 wt.-% of the one or more waxes, relative to the total weight of the lead.

In some embodiments, the lead may comprise between about 10 wt.-% to about 45 wt.-%, more specifically, between about 15 wt.-% to about 35 wt.-% and in particular between about 18.5 wt.-% to about 27 wt.-% of a polymer, more specifically a thermoplast even more specifically an olefine and in particular polyethylene or polypropylene, relative to the total weight of the lead.

In some embodiments, the lead may comprise between about 1 wt.-% to about 20 wt.-%, more specifically, between about 3 wt.-% to about 17 wt.-% and in particular between about 5 wt.-% to about 15 wt.-% of a fatty acid or salt thereof, relative to the total weight of the lead.

In some embodiments, the lead may comprise a fatty acid salt, wherein the fatty acid or salt may comprise a monovalent linear or branched saturated or unsaturated carboxylic acid salt having between about 8 to about 24 carbon atoms, more specifically a monovalent linear saturated carboxylic acid salt having between about 16 to about 20 carbon atoms, and in particular stearic acid, calcium stearate, zinc stearate or mixtures thereof.

In some embodiments, the lead may comprise a filler, in particular a hydrous aluminum phyllosilicate and/or an alkali and/or earth alkali carbonate.

In some embodiments, the lead may comprise between about 10 wt.-% to about 50 wt.-%, more specifically, between about 17 wt.-% to about 40 wt.-% and in particular between about 23.5 wt.-% to about 32 wt.-% of the filler, relative to the total weight of the lead.

In some embodiments, the lead may comprise between about 5 wt.-% to about 30 wt.-%, more specifically, between about 10 wt.-% to about 25 wt.-% and in particular between about 15 wt.-% to about 20 wt.-% of a hydrous aluminum phyllosilicate, more specifically a layered hydrous aluminum phyllosilicate and in particular kaolinite, relative to the total weight of the lead.

In some embodiments, the lead may comprise between about 5 wt.-% to about 20 wt.-%, more specifically, between about 7 wt.-% to about 15 wt.-% and in particular between about 8.5 wt.-% to about 12 wt.-% of an alkali and/or earth alkali carbonate, more specifically an earth alkali carbonate, relative to the total weight of the lead.

In some embodiments, the lead may comprise between about 2 wt.-% to about 20 wt.-%, more specifically between about 4 wt.-% to about 15 wt.-% and in particular between about 7 wt.-% to about 11 wt.-% of a processing aid, more specifically a lubricant and in particular tetrastearate pentaerythritol.

In some embodiments, the lead may comprise between about 0.5 wt.-% to about 5 wt.-%, more specifically between about 1 wt.-% to about 3.5 wt.-% and in particular between about 1.5 wt.-% to about 2.5 wt.-% of a plasticizer, more specifically of a phthalic acid ester and in particular of C₇-C₉ alkyl benzyl phthalate, relative to the total weight of the lead.

In some embodiments, the lead may comprise between about 0.05 wt.-% to about 10 wt.-%, more specifically between about 0.05 wt.-% to about 7 wt.-% and in particular between about 0.1 wt.-% to about 5 wt.-% of one or more colorants, relative to the total weight of the lead.

In some embodiments, the lead may comprise between about 5 wt.-% to about 80 wt.-%, more specifically between about 10 wt.-% to about 60 wt.-%, even more specifically, between about 15 wt.-% to about 55 wt.-% and in particular between about 15 wt.-% to about 50 wt.-% of a hydrous aluminum phyllosilicate, more specifically a layered hydrous aluminum phyllosilicate and in particular kaolinite, relative to the total weight of the lead.

### Brief Description of the Drawings

**Figure** 1 shows the reflective spectrum of Zinc Sulfide.
**Figure** 2 shows the reflective spectrum of Barium Sulfate.
**Figure** 3 shows the reflective spectrum of Calcium Silicate.
**Figure** 4 shows the reflective spectrum of Calcium Carbonate.

### Detailed Description

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

Writing instruments such as pencils or wax crayons comprise or consist of a solid pigment core, also referred to as a lead. The writing instruments comprising a lead are used to create markings by rubbing the lead against a substrate, such as a piece of paper. To adjust the lightness of a lead and its deposit, TiO₂ is typically used as an effective whitening pigment.

However, recently concerns have emerged that TiO₂ dust may possible be carcinogenic to humans. During the production of leads comprising TiO₂, in particular during the mixing of the structural component with the TiO₂, TiO₂ dust may be generated, which may be harmful to the manufacturing personnel. Further, in some jurisdictions TiO₂ in powder form has been banned to be used above a certain concentration due to concerns about a carcinogenic risk by inhalation. For example, the EU has placed a limit on the use of TiO₂ powder at 1 wt.-% or the product must be labelled as comprising possible carcinogens, even if the TiO₂ cannot become airborne from the product. As a result, an alternative for TiO₂ to adjust the lightness of leads is required.

However, exchanging TiO₂ for other white colorants, in particular pigments, is not straightforward since white colorants cannot be used interchangeably. Alternative white colorants may not be equally effective in improving the lightness of the lead and/or the lead's deposit. Further, alternative white colorants may lead to a discoloration, in particular a yellowish tinge, of the lead and/or the lead's deposit. To make matters worse, TiO₂ is an almost ideal white colorant since it is effective in providing leads, in which the lead's color is perceived very similar to the formed deposit. This may make it easier for users to choose between different colors and predicting how the markings will look. Alternative white colorants can result in leads, where the perceived color of the lead varies strongly from the lead's deposit.

An alternative pigment which may be used to substitute TiO₂ is zirconium dioxide, ZrO₂. However, the production of ZrO₂ may be energy-intensive and expensive. Likewise, zinc sulfide and zinc oxide may be used to substitute TiO₂ but are relatively expensive in white pigment grades. Further, these pigments may result in a yellow tinge of the writing instrument lead and deposit. A plethora of further pigments has been tried for substituting TiO₂, but have shown unsatisfying results.

Surprisingly, it has been found that a mixture of two or more of barium sulfate (BaSO₄), calcium silicate (Ca₂SiO₄), and calcium carbonate (CaCO₃) and at least one of zinc sulfide (ZnS), zinc oxide (ZnO) or zirconium dioxide (ZrO₂) may be an effective white pigment to increase the lightness of leads. In particular, the mixture may be effective in increasing the lightness in comparatively low amounts, while being relatively inexpensive to produce. Further, the mixture of two or more of the aforementioned pigments may not lead to a significant discoloration, in particular a yellow tinge.

Without wishing to be bound by theory, it is believed that the pigment's different reflection rates at certain wavelengths may be responsible for providing a cost-effective white pigment composition which provides excellent results as a substituent of TiO₂ in leads. More specifically, ZnO, ZnS and/or ZrO₂, have a very high refractive index at a wavelength of 288 nm, at 2.0, 2.36 and 2.16, respectively. Thus, these pigments can be effective white pigments. Yet, the pigments may less efficiently reflect violet-blue light and red light compared to other wavelengths of visible light. On the other hand, BaSO₄, Ca₂SiO₄, and CaCO₃ have refractive indices of about 1.6-1.7 and are hence not as efficient at refracting light compared to the abovementioned pigments. However, BaSO₄, Ca₂SiO₄ and CaCO₃ may reflect a higher proportion of violet-blue light and red light, relative to the total amount of reflected light, compared to ZnS, ZnO, and/or ZrO₂. As white light is the combination of all wavelengths of the visible light spectrum, the combination of these pigments may thus result in an improved white.

Accordingly, in a first aspect, the present disclosure relates to a writing instrument comprising a lead, wherein the lead comprises at least two pigments selected from the group of BaSO₄, Ca₂SiO₄ and CaCO₃ and at least one pigment selected from the group of ZnS, ZnO and ZrO₂. The combination of the at least two pigments and the at least one pigment is present in an amount between about 1.2 wt.-% to about 50 wt.-%, relative to the total weight of the lead; and the lead comprises less than 1 wt.-% TiO₂. The combination of the at least two pigments selected from the group of BaSO₄, Ca₂SiO₄ and CaCO₃ (more specifically all three of BaSO₄, Ca₂SiO₄ and CaCO₃) and at least one pigment selected from the group of ZnS, ZnO and ZrO₂ (more specifically at least ZnS) may also be referred to as "white pigment blend".

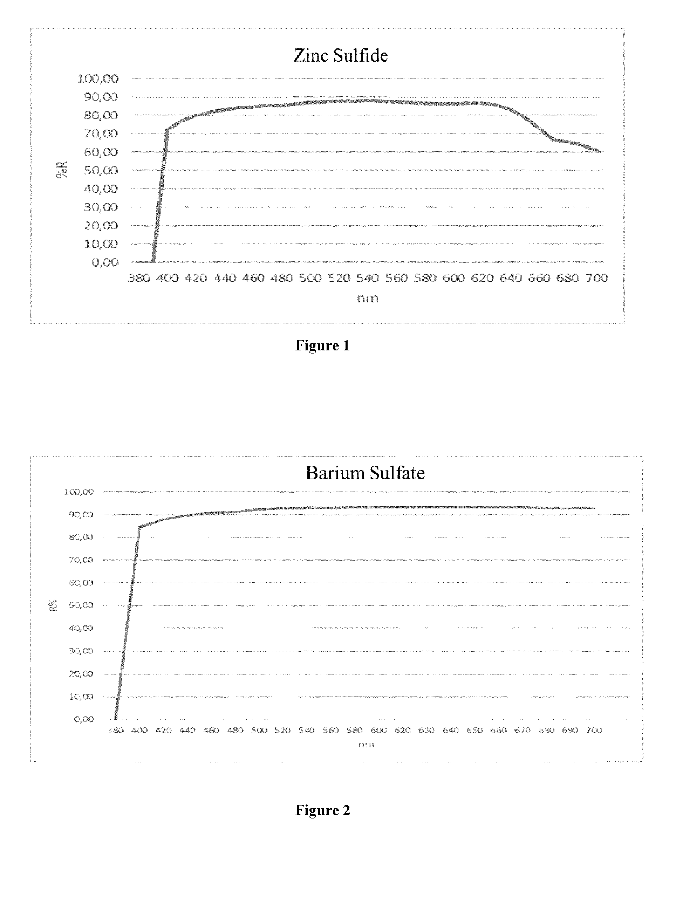

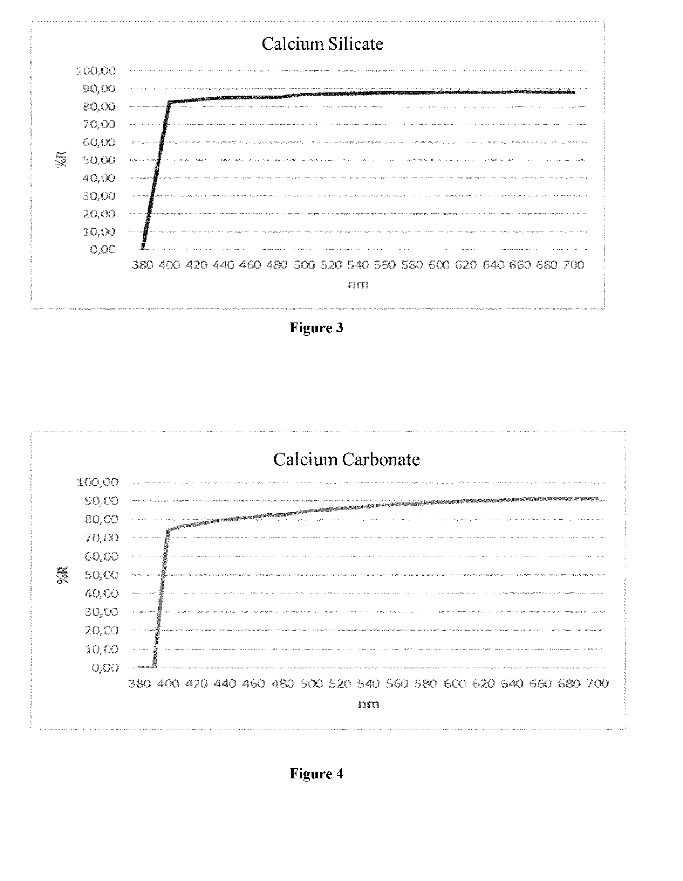

Figures 1 to 4 show the reflectivity of ZnS, BaSO₄, Ca₂SiO₄ and CaCO₃ relative to the wavelength. As can be seen, ZnS reflects violet-blue light (about 390 nm) at only about 70% and other wavelengths at about 90 % up until 620 nm. Further, ZnS reflects substantially less red light compared to yellow light. On the other hand, BaSO₄ and Ca₂SiO₄ reflect more than 80 % of violet-blue light and other wavelengths also at about 90%. CaCO₃ also reflects a higher proportion of blue light compared to ZnS, and significantly more red light. Accordingly, the spectrum of light reflected by mixtures of two of BaSO₄, CaCO₃ and Ca₂SiO₄ comprises a higher proportion of violet-blue light and red light compared to that of ZnS.

In some embodiments, the lead may comprise less than about 0.5 wt.-%, more specifically less than about 0.2 wt.-% and in particular substantially no or no TiO₂. Hence, the combination of two or more of BaSO₄, Ca₂SiO₄, CaCO₃ and at least one of ZnS, ZnO and ZrO₂ may be used to replace TiO₂. Further, in some embodiments, the lead may comprise all of the pigments from the group of BaSO₄, Ca₂SiO₄ and CaCO₃. Additionally or alternatively, in some embodiments, the lead may comprise in particular ZnS.

The lead may comprise between about 2 wt.-% to about 40 wt.-%, more specifically between about 3 wt.-% to about 30 wt.-%, even more specifically between about 4 wt.-% to about 27 wt.-%, and in particular between about 5 wt.-% to about 25 wt.-% of a combination of the at least two pigments, relative to the total weight of the lead. The amount of the at least two pigments may be adjusted depending on the desired shade of the lead.

Iron (II) sulfide, FeS, may be present in some pigments. In particular, ZnS is commonly sourced from sphalerite, which is a sulfide mineral with the chemical formula (Zn,Fe)S. However, when ZnS is used as a white pigment, minor impurities of FeS may lead to a yellow tinge or a progressively greying tinge of the ZnS pigment. Accordingly, the lead may comprise less than about 0.5 wt.-%, more specifically less than about 0.2 wt.-% and in particular substantially no or no FeS.

The writing instrument may be a handheld writing instrument.

The degree of lightening provided by the pigments may depend on their ratios. Without wishing to be bound by theory, it is believed that specific ratios allow most efficiently compensating the wavelength dependence of the reflection of the individual white pigments. It has been found, that an improved degree of lightening may be observed when, the ratio of BaSO₄ to Ca₂SiO₄ is between about 8:1 to about 1:1, more specifically between about 6:1 to about 1.5:1 and in particular between about 4:1 to about 2:1. Further, the ratio of BaSO₄ to CaCO₃ may be between about 50:1 to about 2:1, more specifically between about 30:1 to about 5:1 and in particular between about 20:1 to about 7:1. Additionally, the ratio of BaSO₄ to the total content of ZnS, ZnO and ZrO₂ may be between about 5:1 to about 1:3, more specifically between about 3:1 to about 1:2 and in particular between about 2:1 to about 1:1. The ratio of Ca₂SiO₄ to CaCO₃ may be between about 8:1 to about 1:1, more specifically between about 6:1 to about 1.5:1 and in particular between about 4:1 to about 2:1. The ratio of the total content of ZnS, ZnO and ZrO₂ to Ca₂SiO₄ may be between about 5:1 to about 1:3, more specifically between about 4:1 to about 1:2 and in particular between about 3:1 to about 1:1. Finally, the ratio of the total content of ZnS, ZnO and ZrO₂ to CaCO₃ may be between about 20:1 to about 1:1, more specifically between about 15:1 to about 2:1 and in particular between about 10:1 to about 3:1. The aforementioned ratios are weight ratios.

The lightness and the color of the lead in general may be defined as per the CIELAB or CIELCh color space. The CIELAB color space, also referred to as L*a*b*, is a color space defined by the International Commission on Illumination. The color space is designed to approximate human vision. The CIELAB color space defines color in term of three coordinates L*, a* and b*. L* represents the lightness of the color. An L* = 0 yields black and an L* = 100 indicates diffuse white. Specular white may attain L* values above 100. a* defines a color's position between red and green. A negative a* value indicates green and positive values indicate red. b* defines a color's position between blue and yellow. A negative b* value indicates blue and positive values indicate yellow.

The CIELCh color space is based on the CIELAB color space. In the CIELCh color space the lightness L* remains unchanged. However, the a* and b* are converted into the polar coordinates C*, for chroma/relative saturation, and h° for hue angle/angle of the hue in the CIELAB color wheel. The term "chroma" within this disclosure is well-known in the art and attributed its common meaning in this technical field. In some embodiments, the term "chroma" may refer to colorfulness of an area judged as a proportion of the brightness of a similarly illuminated area that appears white or highly transmitting.

The C* may be derived from a* and b* by formula I: $C * = \sqrt{{a}^{2} + {b}^{2}}$ (I)

The h° may be derived from a* and b* by formula II: $h ° = atan \left(\frac{b *}{a *}\right)$ (II)

Further, based on the L*, a* and b* value a color-difference ${ΔE}_{00}^{∗}$ can be calculated based on ISO/CIE 11664-6:2014 - Colorimetry Part 6: CIEDE2000 Colour-difference formula.

A protocol for measuring the L*, a* and b* value is provided in the experimental section.

It has been surprisingly found that the particle size may influence the color (in particular the L*-value) of the lead. D₅₀ is a measure for the particle size, in particular the mass-median-diameter, thus the median particle size by volume. In particular it has been found that the following particle sizes may improve the lightning effect of the pigments. The BaSO₄ particles may have a D₅₀ between about 0.1 µm to about 10 µm, more specifically between about 0.3 µm to about 3 µm, in particular between about 0.5 µm to about 1.5 µm. Further, the Ca₂SiO₄ particles may have a D₅₀ between about 1 µm to about 100 µm, more specifically between about 3 µm to about 30 µm and in particular between about 5 µm to about 15 µm. Additionally, the CaCO₃ particles may have a D₅₀ between about 10 nm to about 1000 nm, more specifically between about 10 nm and 500 nm, more specifically between about 10 nm to about 300 nm, more specifically to about 30 nm to about 300 nm, more specifically to about 30 nm to about 200 nm and in particular between about 50 nm to about 150 nm. Finally, the ZnS, ZnO and/or ZrO₂ particles may have a D₅₀ between about 30 nm to about 1000 nm, more specifically between about 50 nm to about 700 nm and in particular between about 250 nm to about 450 nm.

Without wishing to be bound by theory, it is believed that, when present, the small particle size of the CaCO₃ may lead to the CaCO₃ particles acting as "spacers" between the particles of the at least one of ZnS, ZnO and ZrO₂, and optionally BaSO₄ and/or Ca₂SiO₄. The CaCO₃ may increase the space between individual particles of the at least one of ZnS, ZnO and ZrO₂, and optionally BaSO₄ and/or Ca₂SiO₄, which may increase the lightening effect of each particle which in turn may increase the overall lightness of the lead given the same amount of pigment. Additionally, the CaCO₃ may lead to a more uniform distribution of the particles of the at least one of ZnS, ZnO and ZrO₂, and optionally BaSO₄ and/or Ca₂SiO₄, which in turn may also increase the overall lightness of the lead given the same amount of pigment. Without wishing to be bound by theory, it is believed that the CaCO₃ particles may be arranged around the particles of the at least one pigment, while covering only a small part of the total surface area of the pigment. The CaCO₃ particles therefore may extend from the surface of the particles of the at least one pigment, thereby increasing the distance between the particles of the at least one pigment. As a result, the probability of light hitting a particle of the at least one pigment may be increased in the presence of small CaCO₃ particles, compared to the amount of the at least one pigment without the CaCO₃ particles.

Another measure for the particle size is the D₉₀, in particular 90% of the particles by volume exhibit a diameter smaller than the D₉₀. In particular, the D₉₀ may be used with the D₅₀ to assess the width of the particle size distribution. The particle size distribution and the D₅₀ and D₉₀ in particular may be measured for example according to ISO 13320:2020. The BaSO₄ particles may have a D₉₀ between about 0.15 µm to about 15 µm, more specifically between about 0.5 µm to about 5 µm, in particular between about 1.3 µm to about 2.3 µm. The Ca₂SiO₄ particles may have a D₉₀ between about 3 µm to about 150 µm, more specifically between about 7 µm to about 50 µm and in particular between about 10 µm to about 30 µm. The CaCO₃ particles may have a D₉₀ between about 50 nm to about 1500 nm, more specifically between about 150 nm to about 700 nm and in particular between about 250 nm to about 400 nm. The ZnS, ZnO and ZrO₂ particles may have a D₉₀ between about 50 nm to about 1500 nm, more specifically between about 300 nm to about 1250 nm and in particular between about 700 nm to about 1000 nm.

Additionally, it has been found that the BET-value may influence the degree of lightening provided by the pigments. The BET-value is a measure for the specific surface area of a material. The BaSO₄ particles may have a BET-value between about 0.5 m²/g to about 20 m²/g, more specifically between about 1.5 m²/g to about 8 m²/g and in particular about 2 m²/g to about 6 m²/g, measured according to DIN ISO 9277:2014-01. Further, Ca₂SiO₄ particles may have a BET-value between about 2 m²/g to about 150 m²/g, more specifically between about 10 m²/g to about 70 m²/g and in particular about 25 m²/g to about 50 m²/g, measured according to DIN ISO 9277:2014-01. Moreover, the CaCO₃ particles may have a BET-value between about 5 m²/g to about 150 m²/g, more specifically between about 10 m²/g to about 70 m²/g and in particular about 20 m²/g to about 40 m²/g, measured according to DIN ISO 9277:2014-01. Finally, the ZnS, ZnO and/or ZrO₂ particles may have a BET-value between about 1 m²/g to about 25 m²/g, more specifically between about 3 m²/g to about 15 m²/g and in particular about 5 m²/g to about 11 m²/g, measured according to DIN ISO 9277:2014-01.

Without wishing to be bound by theory, it is believed that the high BET-value of the Ca₂SiO₄ compared to its particle size distribution may lead to an improved degree of lightening by the Ca₂SiO₄. In some embodiments, the Ca₂SiO₄ may have a crystalline structure i.e. the Ca₂SiO₄ may be a crystal. More specifically, in some embodiments, the crystal form of the Ca₂SiO₄ may be monoclinic, more specifically monoclinic-prismatic.

It should be understood that calcium silicate (Ca₂SiO₄) encompasses hydrated calcium silicate as well as non-hydrated calcium silicate. In some embodiments, the Ca₂SiO₄ is advantageously hydrated.

Again, without wishing to be bound by theory, white pigments in general act by scattering all wavelengths of light, in particular due to their relatively high refractive index. Localized non-uniformities on the particle surface may lead to scattering. As a result, it is believed that a theoretical perfectly spherical particle may lead to a lower degree of scattering compared to a particle comprising the aforementioned non-uniformities. A perfect sphere exhibits the smallest ratio of particle size to surface area, and hence its BET-value is also the smallest. Accordingly, a higher BET-value indicates a higher amount of non-uniformities, in particular reflective surfaces, comprised within the particle relative to the particle's mass.

Further, still, without wishing to be bound by theory, it is believed that the Ca₂SiO₄ particles exhibiting high BET-value may be an efficient white pigment in writing instrument leads, because the particles may not be efficiently wetted by the matrix surrounding them, in particular due to their nested geometry. The effectiveness of light-scattering depends on the difference between the refractive indexes of the matrix and that of the pigments disposed therein. For example, in wax crayons the matrix may comprise waxes such as a paraffin, which may exhibit a refractive index of about 1.55, while Ca₂SiO₄ may exhibit a refractive index of about 1.7. Hence, in a paraffin matrix, Ca₂SiO₄ pigment particles may not efficiently refract light. However, the refractive index of air is about 1.00. Therefore, if the surface of Ca₂SiO₄ pigment particles is not completely wetted by the paraffin matrix, incident light may be refracted at an air-particle interface, which may lead to a highly effective refraction compared to the paraffin-particle interface, and may therefore result in a more effective pigment.

In some embodiments, the writing instrument may be a wax crayon.

In some embodiments, in particular wherein the writing instrument is a wax crayon, the lead may have a diameter between about 5 mm to about 35 mm, more specifically between about 6 mm to about 20 mm and in particular 7 mm to about 12 mm.

In some embodiments, in particular wherein the writing instrument is a wax crayon, the lead may comprise between about 10 wt.-% to about 95 wt.-% of one or more waxes, relative to the total weight of the lead.

In some embodiments, in particular wherein the writing instrument is a wax crayon, the lead may comprise between about 50 wt.-% to about 95 wt.-%, more specifically between about 60 wt.-% to about 90 wt.-% and in particular between about 70 wt.-% to about 85 wt.-% of one or more waxes, relative to the total weight of the lead.

In some further alternative embodiments, in particular wherein the writing instrument is a wax crayon, the lead may comprise between about 10 wt.-% to about 45 wt.-%, more specifically between about 15 wt.-% to about 40 wt.-% and in particular between about 20 wt.-% to about 30 wt.-% of one or more waxes, relative to the total weight of the lead.

The term "wax," in the present disclosure is intended to be used as is well-established in the field of writing instruments and is, in particular, meant to refer to a lipophilic (fatty) compound that is solid at e.g. room temperature (e.g. about 25 °C) with a reversible solid/liquid change of state. The method of measuring the melting point of the wax is not particularly limited and may be measured using a differential scanning calorimeter (DSC), for example the calorimeter sold under the name DSC 3 by the company Mettler Toledo.

Amongst the aforementioned waxes, the present disclosure relates to waxes having a melting point of at least about 40°C and a solubility water at about 25°C of less than about 1000 mg/L. These properties may help in providing a relatively water-insoluble solid base matrix for the writing instrument, in particular for a wax crayon, for the dispersion of the pigment therein. In some embodiments, the one or more waxes may have a melting point of at least about 35°C, more specifically at least about 50°C and in particular at least about 75°C. In some embodiments, the wax may have a melting point range of between about 35°C and about 200°C, more specifically between about 55°C and about 180°C, and in particular between about 75°C and about 150°C.

In some embodiments, the wax may have a solubility in water at about 25°C of less than about 100 mg/L, more specifically a solubility of less than about 10 mg/L, and in particular a solubility of less than about 1 mg/L. In some embodiments, the wax may be substantially insoluble or insoluble in water at about 25 °C. The method of determining the solubility of the wax is not particularly limited and may be performed by any suitable means, for instance using a USP Dissolution Apparatus 2 (paddle type).

In some embodiments, the one or more waxes may comprise one or more apolar waxes. Examples of such apolar waxes include paraffin waxes, microcrystalline waxes, ozokerine and Fisher-Tropsch waxes. Apolar waxes may be hydrocarbon-based and may be substantially free or free of polar groups.

In some embodiments, in particular wherein the writing instrument is a wax crayon, the lead may comprise between about 10 wt.-% to about 45 wt.-%, more specifically between about 15 wt.-% to about 35 wt.-% and in particular between about 18.5 wt.-% to about 27 wt.-% of a polymer, more specifically a thermoplast even more specifically an olefine and in particular polyethylene or polypropylene, relative to the total weight of the lead. The polymer may increase the leads resistance to breaking. The addition of the polymer may increase the leads modulus of elasticity and/or hardness.

In some embodiments, in particular wherein the writing instrument is a wax crayon, the lead may comprise between about 1 wt.-% to about 20 wt.-%, more specifically between about 3 wt.-% to about 17 wt.-% and in particular between about 5 wt.-% to about 15 wt.-% of a fatty acid or salt thereof, relative to the total weight of the lead.

In some embodiments, in particular wherein the writing instrument is a wax crayon, the fatty acid or salt may comprise a monovalent linear or branched saturated or unsaturated carboxylic acid salt having between about 8 to about 24 carbon atoms, more specifically a monovalent linear saturated carboxylic acid salt having between about 16 to about 20 carbon atoms, and in particular stearic acid, calcium stearate, zinc stearate or mixtures thereof. The fatty acid and/or fatty acid salts may improve the smoothness of writing and/or drawing, in particular by improving the glide. Moreover, the fatty acid and/or fatty acid salt may increase the laydown and thereby the quality of the deposit. Fatty acids may migrate to the surface of the lead, which may lead to the formation of a fatty film, which may be unpleasant to the user. Fatty acid salts may be in some instances advantageous as they have a reduced tendency to migrate to the surface of the lead.

In some embodiments, in particular wherein the writing instrument is a wax crayon, the lead may comprise a filler, in particular a hydrous aluminum phyllosilicate and/or an alkali and/or earth alkali carbonate. The filler may also comprise CaCO₃, however with a greater particle size compared to the CaCO₃ in the white pigment composition. More specifically, the CaCO₃ in the filler may have a D₅₀ between about 1 µm to about 15 µm, more specifically between about 1.5 µm to about 5 µm, in particular between about 2 µm to about 3 µm.

In some embodiments, in particular wherein the writing instrument is a wax crayon, the lead may comprise between about 10 wt.-% to about 50 wt.-%, more specifically between about 17 wt.-% to about 40 wt.-% and in particular between about 23.5 wt.-% to about 32 wt.-% of the filler, relative to the total weight of the lead. Some fillers, in particular kaolinite, may comprise a layered structure. As a result, filler, such as kaolinite, may improve the laydown of a lead by providing surfaces where along shearing action may occur. Additionally, the fillers may decrease the price of the lead.

In some embodiments, in particular wherein the writing instrument is a wax crayon, the lead may comprise between about 5 wt.-% to about 30 wt.-%, more specifically between about 10 wt.-% to about 25 wt.-% and in particular between about 15 wt.-% to about 20 wt.-% of the hydrous aluminum phyllosilicate, more specifically a layered hydrous aluminum phyllosilicate and in particular kaolinite, relative to the total weight of the lead. In some embodiments, the hydrous aluminum phyllosilicate may be at least partly or fully substituted in mica and/or talc.

In some embodiments, in particular wherein the writing instrument is a wax crayon, the lead may comprise between about 5 wt.-% to about 20 wt.-%, more specifically between about 7 wt.-% to about 15 wt.-% and in particular between about 8.5 wt.-% to about 12 wt.-% of the alkali and/or earth alkali carbonate, more specifically an earth alkali carbonate, relative to the total weight of the lead.

In some embodiments, in particular wherein the writing instrument is a wax crayon, the lead may comprise between about 0.5 wt.-% to about 5 wt.-%, more specifically between about 1 wt.-% to about 3.5 wt.-% and in particular between about 1.5 wt.-% to about 2.5 wt.-% of a plasticizer, more specifically of a phthalic acid ester and in particular of C₇-C₉ alkyl benzyl phthalate, relative to the total weight of the lead. The plasticizer may soften the lead and thereby increase the laydown of the lead, which in turn may improve the visibility and/or intensity of the deposit.

In some embodiments, in particular wherein the writing instrument is a wax crayon, the lead may comprise between about 2 wt.-% to about 20 wt.-%, more specifically between about 4 wt.-% to about 15 wt.-% and in particular between about 7 wt.-% to about 11 wt.-% of a processing aid, more specifically a lubricant and in particular tetrastearate pentaerythritol. The processing aid may improve manufacturing efficiency of the lead.

In some embodiments, in particular wherein the writing instrument is a wax crayon, the lead may comprise between about 0.05 wt.-% to about 10 wt.-%, more specifically between about 0.05 wt.-% to about 7 wt.-% and in particular between about 0.1 wt.-% to about 5 wt.-% of one or more colorants, relative to the total weight of the lead.

The one or more colorant (such as dye or a pigment (i.e. an additional pigment which is different from BaSO₄, Ca₂SiO₄, CaCO₃, ZnS, ZnO, ZrO₂ or TiO₂)) may adjust the color of the lead. For example, the addition of a blue pigment may lead to a blue lead. The term "colorant" used within this disclosure is well known in the art. Within this disclosure the proportions attributed to "colorants" shall not apply to BaSO₄, Ca₂SiO₄, CaCO₃, ZnS, ZnO, ZrO₂ or TiO₂. In other words, the term "colorant" in the case of the present disclosure does not include BaSO₄, Ca₂SiO₄, CaCO₃, ZnS, ZnO, ZrO₂ or TiO₂.

In some embodiments, in particular wherein the writing instrument is a pencil, the writing instrument may comprise a casing and the lead may be comprised within the casing.

In some embodiments, in particular wherein the writing instrument is a pencil, the lead may have a diameter of between about 2.0 mm to about 4.5 mm, more specifically between about 2.3 mm to about 4.2 mm and in particular between about 2.8 mm to about 4.0 mm.

In some embodiments, in particular wherein the writing instrument is a pencil, the lead may comprise between about 5 wt.-% to about 80 wt.-%, more specifically, between about 10 wt.-% to about 60 wt.-%, more specifically between about 15 wt.-% to about 55 wt.-% and in particular between about 15 wt.-% to about 50 wt.-% of a hydrous aluminum phyllosilicate, more specifically a layered hydrous aluminum phyllosilicate and in particular kaolinite, relative to the total weight of the lead. In some embodiments, the hydrous aluminum phyllosilicate may be at least partly or fully substituted in mica and/or talc.

In some embodiments, in particular wherein the writing instrument is a pencil, the lead may comprise between about 1 wt.-% to about 20 wt.-%, more specifically between about 3 wt.-% to about 17 wt.-% and in particular between about 5 wt.-% to about 15 wt.-% of a fatty acid or salt thereof, relative to the total weight of the lead.

In some embodiments, in particular wherein the writing instrument is a pencil, the fatty acid or salt may comprise a monovalent linear or branched saturated or unsaturated carboxylic acid salt having between about 8 to about 24 carbon atoms, more specifically a monovalent linear saturated carboxylic acid salt having between about 16 to about 20 carbon atoms, and in particular stearic acid, calcium stearate, zinc stearate or mixtures thereof.

In some embodiments, in particular wherein the writing instrument is a pencil, the lead may comprise between about 5 wt.-% to about 30 wt.-%, more specifically between about 10 wt.-% to about 25 wt.-% and in particular between about 13 wt.-% to about 17 wt.-% of one or more colorants, relative to the total weight of the lead.

In some embodiments, in particular wherein the writing instrument is a pencil, the lead may comprise between about 3 wt.-% to about 50 wt.-%, more specifically, between about 10 wt.-% to about 50 wt.-%, even more specifically between about 15 wt.-% to about 45 wt.-% and in particular between about 20 wt.-% to about 40 wt.-% of a binder, more specifically a polymeric binder, and in particular styrenic polymers such as polystyrene and/or acrylonitrile butadiene styrene, relative to the total weight of the lead.

In some embodiments, in particular wherein the writing instrument is a pencil, the lead may comprise between about 0.5 wt.-% to about 10 wt.-%, more specifically between about 2 wt.-% to about 8 wt.-% and in particular between about 3.5 wt.-% to about 6.5 wt.-% of a plasticizer, more specifically of a benzoate ester.

### Experimental Section

Experiments to determine the influence of a composition according to the first aspect (white pigment blend) on the colorimetric values were performed.

The results were also compared to a TiO₂ composition and a ZrO₂ composition. Wax crayon compositions were used for the tests. The compositions are provided in Table 1.

### Manufacturing of Test Specimen:

The following steps were performed to manufacture the test specimen with a composition according to Table 1:
1) Mix all components.
2) Set a thermostatic bath (for example, AMETEK Brookfield TC-202) to a temperature of 150 °C and add a mixing vessel into the thermostatic bath.
3) Add the mixture to the mixing vessel in the thermostatic bath.
4) Stir the mixture of neutral base and colorant at 2000 rpm with a butterfly tool attached to the DISPERMAT CV3 Plus by VMA-Getzmann GmbH for 2 hours.
5) Remove butterfly tool and fill molten mixture into a cubic mold of the dimensions: 25 mm x 100 mm x 10 mm.
6) Let mixture cool and subsequently remove the finished specimen from the mold.

Table 1 shows the compositions of test specimens.

**Table 1 - Example Compositions of Test Specimen for Tests**

| Component | Examp. A [wt.-%] | Examp. B [wt.-%] | Comp. A - TiO₂ [wt.-%] | Comp. A - ZrO₂ [wt.-%] | Comp. B - TiO₂ [wt.-%] | Comp. B - ZrO₂ [wt.-%] |
|---|---|---|---|---|---|---|
| Wax | 27.10 | 27.05 | 27.10 | 27.10 | 27.04 | 27.04 |
| Polyolefine | 23.50 | 23.450 | 23.50 | 23.50 | 23.45 | 23.45 |
| Fatty Acid Salt | 7.20 | 8.40 | 7.20 | 7.20 | 8.40 | 8.40 |
| Plasticizer | 2.00 | 2.00 | 2.00 | 2.00 | 2.00 | 2.00 |
| Pigment (PV23) | 0.15 | | 0.15 | 0.15 | | |
| Pigment (PR 57:1) | 0.02 | 0.15 | 0.02 | 0.02 | 0.15 | 0.15 |
| Pigment (PR 48:4) | | 0.27 | | | 0.27 | 0.27 |
| White Pigment Blend | 11.99 | 12.77 | | | | |
| TiO₂ | | | 11.99 | | 12.77 | |
| ZrO₂ | | | | 11.99 | | 12.77 |
| Fillers | QSP 100% | QSP 100% | QSP 100% | QSP 100% | QSP 100% | QSP 100% |

### Colorimetry of crayon surface - Test Setup:

To measure the colorimetric data in the CIE L*a*b* color space, e.g. L*, a* and b*a KONICA MINOLTA CM-3610 A spectrophotometer was used. The following settings were applied for the KONICA MINOLTA CM-3610 A spectrophotometer:
illuminant: D65,
angle: 10°,
specular components: included.

The spectrophotometer was used with an opening of measurement at 25.4 mm. For the colorimetric measurements of the surface of a crayon, the crayon's surface is placed in direct contact with the lens of the spectrophotometer.

### Results of the Tests

**Table 2 Results of Colorimetry Test Example A and Comparative Compositions A.**

| | | **Colorimetric data** | | | |
|---|---|---|---|---|---|
| **Composition** | **Evaluated Surface** | **L*** | **a*** | **b*** | **C*** |
| **Example A** | Surface of crayons | 45.61 | 16.23 | -32.26 | 36.11 |
| **Comparative Composition A -TiO₂** | Surface of crayons | 61.66 | 12.79 | -28.87 | 31.58 |
| **Comparative Composition A -ZrO₂** | Surface of crayons | 40.88 | 14.84 | -27.26 | 31.04 |

**Table 3 Results of Colorimetry Test of Example B and Comparative Compositions B.**

| | | **Colorimetric data** | | | |
|---|---|---|---|---|---|
| **Composition** | **Evaluated Surface** | **L*** | **a*** | **b*** | **C*** |
| **Example B** | Surface of crayons | 50.02 | 50.42 | 3.52 | 50.54 |
| **Comparative Composition B -TiO₂** | Surface of crayons | 63.77 | 39.79 | -8.02 | 40.59 |
| **Comparative Composition B -ZrO₂** | Surface of crayons | 47.14 | 50.14 | 9.57 | 51.05 |

As can be seen the white pigment blend may allow providing leads with an improved lightness. In particular, as seen from tables 2 and 3, the white pigment blend may provide an improved L* value compared to ZrO₂.

## Claims

1. A writing instrument comprising a lead, wherein the lead comprises at least two pigments selected from the group of BaSO4, Ca₂SiO₄ and CaCO₃,
and at least one pigment selected from the group of ZnS, ZnO and ZrO₂,
wherein the combination of the at least two pigments and the at least one pigment is present in an amount between 1.2 wt.-% to 50 wt.-%, relative to the total weight of the lead; and
wherein the lead comprises less than 1 wt.-% TiO₂.

2. The writing instrument according to claim 1, wherein the lead comprises all of the pigments from the group of BaSO₄, Ca₂SiO₄ and CaCO₃.

3. The writing instrument according to any preceding claim, wherein the lead comprises ZnS.

4. The writing instrument according to any preceding claim, wherein the lead comprises less than 0.5 wt.-%, more specifically less than 0.2 wt.-% and in particular substantially no or no TiO₂.

5. The writing instrument according to any preceding claim, wherein the ratio of BaSO₄ to Ca₂SiO₄ is between 8:1 to 1:1, more specifically between 6:1 to 1.5:1 and in particular between 4:1 to 2:1.

6. The writing instrument according to any preceding claim, wherein the ratio of BaSO₄ to CaCO₃ is between 50:1 to 2:1, more specifically between 30:1 to 5:1 and in particular between 20:1 to 7:1.

7. The writing instrument according to any preceding claim, wherein the ratio of BaSO₄ to the total content of ZnS, ZnO and ZrO₂ is between 5:1 to 1:3, more specifically between 3:1 to 1:2 and in particular between 2:1 to 1:1.

8. The writing instrument according to any preceding claim, wherein the ratio of Ca₂SiO₄ to CaCO₃ is between 8:1 to 1:1, more specifically between 6:1 to 1.5:1 and in particular between 4:1 to 2:1.

9. The writing instrument according to any preceding claim, wherein the ratio of the total content of ZnS, ZnO and ZrO₂ to Ca₂SiO₄ is between 5:1 to 1:3, more specifically between 4:1 to 1:2 and in particular between 3:1 to 1:1.

10. The writing instrument according to any preceding claim, wherein the ratio of the total content of ZnS, ZnO and ZrO2 to CaCO₃ is between 20:1 to 1:1, more specifically between 15:1 to 2:1 and in particular between 10:1 to 3:1.

11. The writing instrument according to any preceding claim, wherein the Ca₂SiO₄ particles have a D₅₀ between 1 µm to 100 µm, more specifically between 3 µm to 30 µm and in particular between 5 µm to 15 µm; and/or wherein the BaSO₄ particles have a D₅₀ between 0.1 µm to 10 µm, more specifically between 0.3 µm to 3 µm, in particular between 0.5 µm to 1.5 µm.

12. The writing instrument according to any preceding claim, wherein the CaCO₃ particles have a D₅₀ between 10 nm to 1000 nm, more specifically between 30 nm to 300 nm and in particular between 50 nm to 150 nm.

13. The writing instrument according to any preceding claim, wherein the Ca₂SiO₄ particles have a BET-value between 2 m²/g to 150 m²/g, more specifically between 10 m²/g to 70 m²/g and in particular 25 m²/g to 55 m²/g, measured according to DIN ISO 9277:2014-01.

14. The writing instrument according to any preceding claim, wherein the lead comprises between 2 wt.-% to 40 wt.-%, more specifically between 3 wt.-% to 30 wt.-%, even more specifically between 4 wt.-% to 27 wt.-%, and in particular between 5 wt.-% to 25 wt.-% of a combination of the at least two pigments and the at least one pigment, relative to the total weight of the lead.

15. The writing instrument according to any preceding claim, wherein the lead comprises between 10 wt.-% to 95 wt.-% of one or more waxes, relative to the total weight of the lead.

## Patentansprüche

1. Schreibgerät, umfassend eine Mine, wobei die Mine mindestens zwei Pigmente umfasst, ausgewählt aus der Gruppe von BaSO4, Ca₂SiO₄ und CaCO₃,
und mindestens ein Pigment, ausgewählt aus der Gruppe von ZnS, ZnO und ZrO₂,
wobei die Kombination der mindestens zwei Pigmente und des mindestens einen Pigments in einer Menge zwischen 1,2 Gew.-% und 50 Gew.-% vorliegt, relativ zu dem Gesamtgewicht der Mine; und
wobei die Mine weniger als 1 Gew.-% TiO₂ umfasst.

2. Schreibgerät nach Anspruch 1, wobei die Mine alle der Pigmente aus der Gruppe von BaSO₄, Ca₂SiO₄ und CaCO₃ umfasst.

3. Schreibgerät nach einem der vorstehenden Ansprüche, wobei die Mine ZnS umfasst.

4. Schreibgerät nach einem der vorstehenden Ansprüche, wobei die Mine weniger als 0,5 Gew.-%, spezieller weniger als 0,2 Gew.-% und insbesondere im Wesentlichen kein oder kein TiO₂ umfasst.

5. Schreibgerät nach einem der vorstehenden Ansprüche, wobei das Verhältnis von BaSO₄ zu Ca₂SiO₄ zwischen 8 : 1 und 1 : 1, spezieller zwischen 6 : 1 und 1,5 : 1 und insbesondere zwischen 4 : 1 und 2 : 1 liegt.

6. Schreibgerät nach einem der vorstehenden Ansprüche, wobei das Verhältnis von BaSO₄ zu CaCO₃ zwischen 50 : 1 und 2 : 1, spezieller zwischen 30 : 1 und 5 : 1 und insbesondere zwischen 20 : 1 und 7 : 1 liegt.

7. Schreibgerät nach einem der vorstehenden Ansprüche, wobei das Verhältnis von BaSO₄ zu dem Gesamtgehalt von ZnS, ZnO und ZrO₂ zwischen 5 : 1 und 1 : 3, spezieller zwischen 3 : 1 und 1 : 2 und insbesondere zwischen 2 : 1 und 1 : 1 liegt.

8. Schreibgerät nach einem der vorstehenden Ansprüche, wobei das Verhältnis von Ca₂SiO₄ zu CaCO₃ zwischen 8 : 1 und 1 : 1, spezieller zwischen 6 : 1 und 1,5 : 1 und insbesondere zwischen 4 : 1 und 2 : 1 liegt.

9. Schreibgerät nach einem der vorstehenden Ansprüche, wobei das Verhältnis des Gesamtgehalts von ZnS, ZnO und ZrO₂ zu Ca₂SiO₄ zwischen 5 : 1 und 1 : 3, genauer gesagt zwischen 4 : 1 und 1 : 2 und insbesondere zwischen 3 : 1 und 1 : 1 liegt.

10. Schreibgerät nach einem der vorstehenden Ansprüche, wobei das Verhältnis des Gesamtgehalts von ZnS, ZnO und ZrO2 zu CaCO₃ zwischen 20 : 1 und 1 : 1, spezieller zwischen 15 : 1 und 2 : 1 und insbesondere zwischen 10 : 1 und 3 : 1 liegt.

11. Schreibgerät nach einem der vorstehenden Ansprüche, wobei die Ca₂SiO₄-Partikel einen D₅₀ zwischen 1 µm und 100 µm, spezieller zwischen 3 µm und 30 µm und insbesondere zwischen 5 µm und 15 µm aufweisen; und/oder wobei die BaSO₄-Partikel einen D₅₀ zwischen 0,1 µm und 10 µm, spezieller zwischen 0,3 µm und 3 µm, insbesondere zwischen 0,5 µm und 1,5 µm, aufweisen.

12. Schreibgerät nach einem der vorstehenden Ansprüche, wobei die CaCO₃-Partikel einen D₅₀ zwischen 10 nm und 1000 nm, spezieller zwischen 30 nm und 300 nm und insbesondere zwischen 50 nm und 150 nm aufweisen.

13. Schreibgerät nach einem der vorstehenden Ansprüche, wobei die Ca₂SiO₄-Partikel einen BET-Wert zwischen 2 m²/g und 150 m²/g, spezieller zwischen 10 m²/g und 70 m²/g und insbesondere 25 m²/g bis 55 m²/g aufweisen, gemessen nach DIN ISO 9277:2014-01.

14. Schreibgerät nach einem der vorstehenden Ansprüche, wobei die Mine zu zwischen 2 Gew.-% und 40 Gew.-%, spezieller zwischen 3 Gew.-% und 30 Gew.-%, noch spezieller zwischen 4 Gew.-% und 27 Gew.-% und insbesondere zwischen 5 Gew.-% und 25 Gew.-% eine Kombination der mindestens zwei Pigmente und des mindestens einen Pigments umfasst, relativ zu dem Gesamtgewicht der Mine.

15. Schreibgerät nach einem der vorstehenden Ansprüche, wobei die Mine zu zwischen 10 Gew.-% und 95 Gew.-% ein oder mehrere Wachse umfasst, relativ zu dem Gesamtgewicht der Mine.

## Revendications

1. Instrument d'écriture comprenant une mine, dans lequel la mine comprend au moins deux pigments choisis dans le groupe de BaSO4, Ca₂SiO₄ et CaCO₃,
et au moins un pigment choisi dans le groupe de ZnS, ZnO et ZrO₂,
dans lequel la combinaison des au moins deux pigments et de l'au moins un pigment est présente en une quantité comprise entre 1,2 % en poids et 50 % en poids, par rapport au poids total de la mine ; et
dans lequel le plomb comprend moins de 1 % en poids de TiO₂.

2. Instrument d'écriture selon la revendication 1, dans lequel la mine comprend tous les pigments du groupe de BaSO₄, Ca₂SiO₄ et CaCO₃.

3. Instrument d'écriture selon l'une quelconque revendications précédente, dans lequel la mine comprend du ZnS.

4. Instrument d'écriture selon l'une quelconque revendication précédente, dans lequel la mine comprend moins de 0,5 % en poids, plus spécifiquement moins de 0,2 % en poids et en particulier sensiblement pas ou pas de TiO₂.

5. Instrument d'écriture selon l'une quelconque revendication précédente, dans lequel le rapport entre le BaSO₄ et le Ca₂SiO₄ est compris entre 8:1 et 1:1, plus spécifiquement entre 6:1 et 1,5:1 et en particulier entre 4:1 et 2:1.

6. Instrument d'écriture selon l'une quelconque revendication précédente, dans lequel le rapport entre le BaSO₄ et le CaCO₃ est compris entre 50:1 et 2:1, plus spécifiquement entre 30:1 et 5:1 et en particulier entre 20:1 et 7:1.

7. Instrument d'écriture selon l'une quelconque revendication précédente, dans lequel le rapport entre le BaSO₄ et la teneur totale en ZnS, ZnO et ZrO₂ est compris entre 5:1 et 1:3, plus spécifiquement entre 3:1 et 1:2 et en particulier entre 2:1 et 1:1.

8. Instrument d'écriture selon l'une quelconque revendication précédente, dans lequel le rapport entre Ca₂SiO₄ et CaCO₃ est compris entre 8:1 et 1:1, plus spécifiquement entre 6:1 et 1,5:1 et en particulier entre 4:1 et 2:1.

9. Instrument d'écriture selon l'une quelconque revendication précédente, dans lequel le rapport de la teneur totale en ZnS, ZnO et ZrO₂ au Ca₂SiO₄ est compris entre 5:1 et 1:3, plus spécifiquement entre 4:1 et 1:2 et en particulier entre 3:1 et 1:1.

10. Instrument d'écriture selon l'une quelconque revendication précédente, dans lequel le rapport de la teneur totale en ZnS, ZnO et ZrO2 au CaCO₃ est compris entre 20:1 et 1:1, plus spécifiquement entre 15:1 et 2:1 et en particulier entre 10:1 et 3:1.

11. Instrument d'écriture selon l'une quelconque revendication précédente, dans lequel les particules de Ca₂SiO₄ ont un D₅₀ compris entre 1 µm et 100 µm, plus spécifiquement entre 3 µm et 30 µm et en particulier entre 5 µm et 15 µm ; et/ou dans lequel les particules de BaSO₄ présentent un D₅₀ compris entre 0,1 µm et 10 µm, plus spécifiquement entre 0,3 µm et 3 µm, en particulier entre 0,5 µm et 1,5 µm.

12. Instrument d'écriture selon l'une quelconque revendication précédente, dans lequel les particules de CaCO₃ ont un D₅₀ compris entre 10 nm et 1 000 nm, plus spécifiquement entre 30 nm et 300 nm et en particulier entre 50 nm et 150 nm.

13. Instrument d'écriture selon l'une quelconque revendication précédente, dans lequel les particules de Ca₂SiO₄ ont une valeur BET comprise entre 2 m²/g et 150 m²/g, plus spécifiquement entre 10 m²/g et 70 m²/g et en particulier de 25 m²/g à 55 m²/g, mesurée selon la norme DIN ISO 9277:2014-01.

14. Instrument d'écriture selon l'une quelconque revendication précédente, dans lequel la mine comprend entre 2 % en poids et 40 % en poids, plus spécifiquement entre 3 % en poids et 30 % en poids, encore plus spécifiquement entre 4 % en poids et 27 % en poids, et en particulier entre 5 % en poids et 25 % en poids d'une combinaison des au moins deux pigments et de l'au moins un pigment, par rapport au poids total de la mine.

15. Instrument d'écriture selon l'une quelconque revendication précédente, dans lequel la mine comprend entre 10 % en poids et 95 % en poids d'une ou plusieurs cires, par rapport au poids total de la mine.
